# EUROPEAN PATENT APPLICATION

(11) **EP 4 787 603 A1**
(43) Date of publication of application: **05.08.2026**
(21) Application number: 25810774.7
(22) Date of filing: 13.03.2025
(51) Int. Cl.: H01M 50/517

(54) **BATTERY**

(30) Priority: 14.09.2024 CN 202411291387
(71) Applicant: Guangzhou Tinci Materials Technology Co., Ltd., Guangzhou, Guangdong 510760 (CN)
(72) Inventor: LIAO, Bo, Guangdong 510670 (CN); SUN, Wenpo, Guangdong 510670 (CN); XIE, Tian, Guangdong 510670 (CN)
(74) Representative: Plougmann Vingtoft a/s
(86) International application number: PCT/CN2025/082425
(87) International publication number: WO 2026/056237

(57) **Abstract**

The present disclosure provides a battery. The battery includes an electrolyte and a battery component in contact with the electrolyte. At least a contact surface of the battery component contacting with the electrolyte includes a stainless steel layer. The electrolyte includes a compound represented by Formula 1:

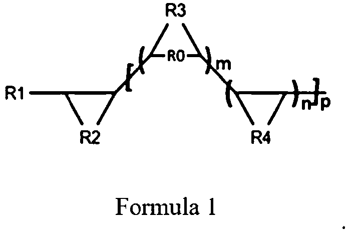

## Description

This application claims priority to the Chinese Patent Application No. 202411291387.0, titled "BATTERY", and filed with China National Intellectual Property Administration on September 14, 2024, the entire disclosure of which is incorporated herein by reference.

### FIELD

The present disclosure belongs to the technical field of batteries, and particularly, relates to a battery.

### BACKGROUND

Lithium-ion batteries have been widely popularized and applied due to their characteristics such as high energy density, long cycle life, and relatively high safety. Depending on packaging types, the lithium-ion batteries may be classified into pouch batteries, prismatic aluminum-cased batteries, and cylindrical batteries.

The cylindrical batteries are taken as an example for illustration. The cylindrical batteries have higher volume energy densities and can be manufactured with mature processes, and thus they are given priority for use in passenger vehicle power batteries. However, at some welding positions of battery components, coatings on stainless steel materials of some battery components are damaged due to welding operations. When an electrolyte contacts with these positions, side reactions may easily occur at welding points of the battery, resulting in a decline in battery performance.

### SUMMARY

In a first aspect of the present disclosure, the present disclosure provides a battery. The battery includes an electrolyte and a battery component in contact with the electrolyte. The battery component includes a stainless steel layer on at least a contact surface of the battery component in contact with the electrolyte. The electrolyte at least includes a compound represented by Formula 1:

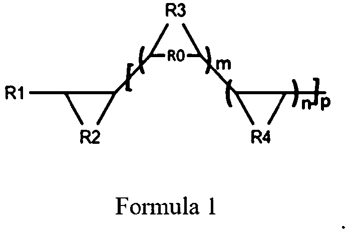

In Formula 1, m is an integer ranging from 0 to 3, n is an integer ranging from 0 to 3, and m and n are not both 0; p is an integer ranging from 1 to 5; R0 is a single bond or methylene; R1 is hydrogen, halogen, hydrocarbyl containing 1 to 5 carbon atoms, or halogenated hydrocarbyl containing 1 to 5 carbon atoms; and R2, R3, and R4 are each independently

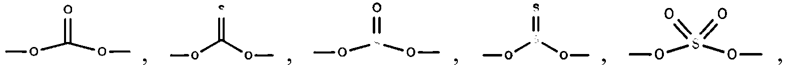

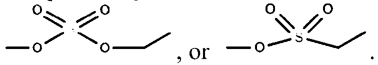

In the present disclosure, a passivation layer can be formed on the surface of the stainless steel layer by adopting the compound represented by Formula 1, facilitating reducing or avoiding side reactions between the stainless steel layer with a damaged coating and the electrolyte. As a result, the battery has better cycling stability.

In some embodiments, the compound represented by Formula 1 is selected from at least one of:

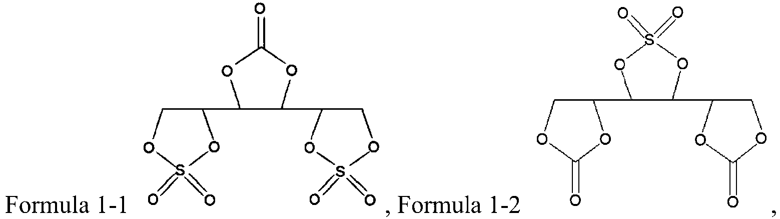

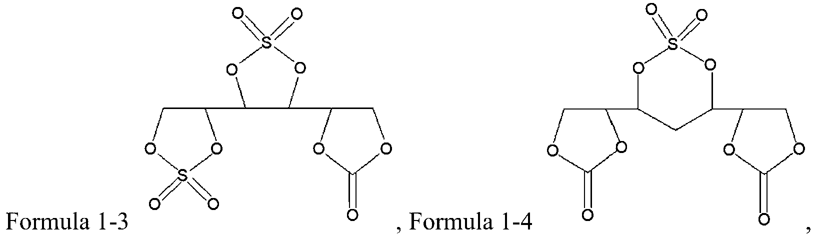

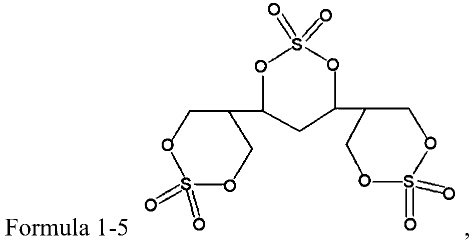

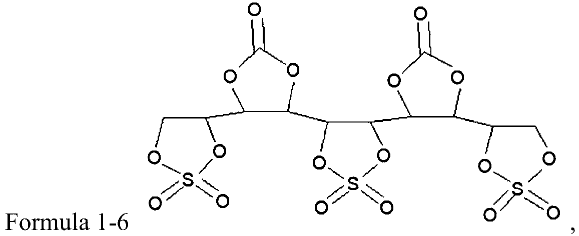

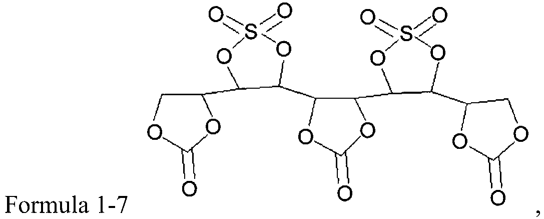

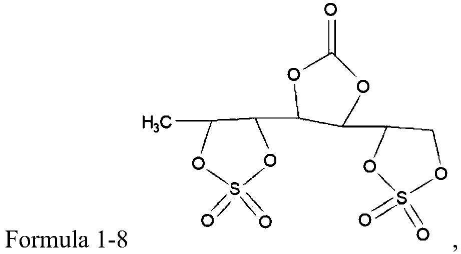

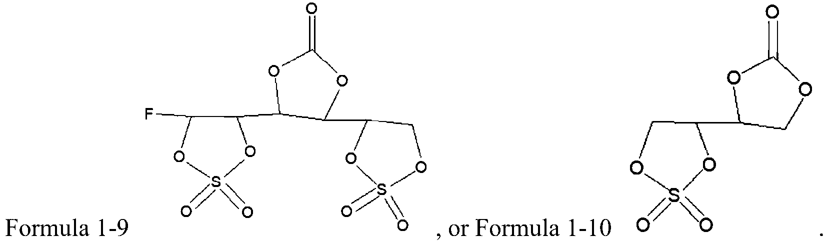

In some embodiments, a mass proportion of the compound represented by Formula 1 in the electrolyte ranges from 0.02% to 10%.

In some embodiments, the battery further includes a housing and/or a cover plate, and a negative current collector. The battery component includes a portion of the housing and/or cover plate welded to the negative current collector. The portion includes the stainless steel layer.

In some embodiments, the portion of the housing and/or cover plate welded to the negative current collector has a cross-sectional area ranging from 5 mm² to 400 mm².

In some embodiments, the battery includes a cylindrical battery.

In some embodiments, a housing of the cylindrical battery has an outer diameter ranging from 20 mm to 65 mm.

In some embodiments, the electrolyte satisfies at least one of the following conditions (1) to (3): (1) the electrolyte includes a solvent, the solvent including at least one of a carbonate solvent, a carboxylate solvent, an ether solvent, a phosphorus-containing solvent, a sulfur-containing solvent, or a fluorinated aromatic solvent; (2) the electrolyte includes a conductive salt, the conductive salt including at least one of lithium hexafluorophosphate, lithium bis(fluorosulfonyl)imide, lithium bis(trifluoromethylsulfonyl)imide, sodium hexafluorophosphate, sodium bis(fluorosulfonyl)imide, or sodium bis(trifluoromethylsulfonyl)imide; or (3) the electrolyte includes an additive, the additive including at least one of vinylene carbonate, fluoroethylene carbonate, vinylethylene carbonate, or succinic anhydride.

In some embodiments, the battery further includes a positive active material. The positive active material includes at least one of lithium iron phosphate, lithium cobalt oxide, ternary material LiNiₓCo_{y}MnzO₂, lithium iron manganese phosphate material, lithium-rich manganese-based material xLi₂MnO₃·(1-x)LiMO₂, lithium nickel manganese oxide, lithium manganese oxide, sodium iron phosphate material, three-dimensional tunnel-structured Na_{0.44}MnO₂, P2-layered NaMO₂, NaFePO₄, Na₄Fe₃(PO₄)₂P₂O₇, Na₃V₂(PO₄)₃, Na₃V₂(PO₄)₂F₃, Na₂Fe(CN)₆, or Na₂MnFe(CN)₆.

In some embodiments, the battery further includes a negative material. The negative material includes at least one of graphite, hard carbon, a silicon-containing compound, or silicon.

### BRIEF DESCRIPTION OF THE DRAWINGS

These and other aspects and advantages of embodiments of the present disclosure will become apparent and more readily appreciated from the following descriptions made with reference to the accompanying drawings.
FIG. 1 is a schematic structural view of a cylindrical battery according to some embodiments of the present disclosure.
FIG. 2 is a schematic structural view of a cover plate.
FIG. 3 is a partial cross-sectional view of a cover plate.
FIG. 4 is a schematic view of a welding point.

### Reference numerals:

1: cylindrical battery; 6: negative current collector; 10: cover plate base; 11: electrolyte injection hole; 111: first channel; 113: second channel; 115: third channel; 30: abutment portion; 50: counterbore; 70: explosion-proof groove; 100: cover plate; 300: housing; 500: jelly roll; 700: welding point.

### DETAILED DESCRIPTION

Unless otherwise defined, all technical and scientific terms used herein have the same meaning as commonly understood by those skilled in the art of the present disclosure. The terms in the present disclosure are only used for the purpose of describing exemplary embodiments, but are not intended to limit the present disclosure. Unless otherwise specified, numerical values of various parameters mentioned in the present disclosure can be measured using various measurement methods commonly used in the art (for example, they can be tested according to methods given in the embodiments of the present disclosure).

The terms such as "comprising", "including" and "having" and any variations thereof as used in the specification and claims of the present disclosure are open-ended expressions, i.e., including contents specified in the present disclosure but not excluding other contents.

In the description of the present disclosure, regardless of whether words such as "about" or "approximately" are present, all the numbers disclosed herein are approximate values. The value of each number may differ by less than 10% or by a difference that is considered reasonable by those skilled in the art, such as 1%, 2%, 3%, 4% or 5%.

The solutions of the present disclosure are described below with reference to embodiments. Those skilled in the art will appreciate that the following embodiments are only used to illustrate the present disclosure and should not be construed as limitations on the scope of the present disclosure. When the specific technology or conditions are not specified in the embodiments, the technology or conditions described in the literature in the art or a product manual will prevail. Reagents and instruments used without specifying the manufacturer are all conventional and commercially available products.

A first aspect of embodiments of the present disclosure provides a battery. The battery includes an electrolyte and a battery component in contact with the electrolyte. The battery component includes a stainless steel layer on at least a contact surface of the battery component in contact with the electrolyte The electrolyte at least includes a compound represented by Formula 1:

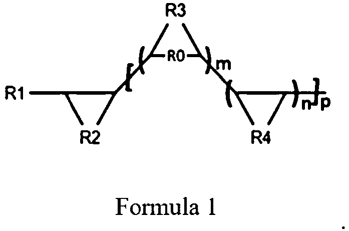

In Formula 1, m is an integer ranging from 0 to 3, n is an integer ranging from 0 to 3, and m and n are not both 0; p is an integer ranging from 1 to 5; R0 is a single bond or methylene; R1 is hydrogen, halogen, hydrocarbyl containing 1 to 5 carbon atoms, or halogenated hydrocarbyl containing 1 to 5 carbon atoms; and R2, R3, and R4 are each independently

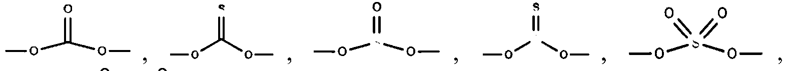

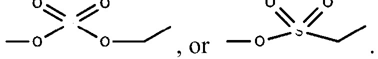

Some components (e.g., a housing and/or a cover plate) of some batteries (e.g., cylindrical batteries) are made of stainless steel. Typically, these components are each provided with a nickel-plated layer on surfaces thereof to protect the stainless steel layer, thereby effectively preventing reactions caused by contact between the components and the electrolyte. However, when the nickel-plated layer on the surface of the stainless steel layer of the battery component for contacting with the electrolyte is damaged, the stainless steel layer is directly exposed to the electrolyte. During a charge and discharge process of the battery, the stainless steel layer may be corroded by the electrolyte, leading to severe corrosion. At the same time, the electrolyte is extensively decomposed, resulting in poor cycling stability of the battery.

In the embodiments of the present disclosure, by adopting the compound represented by Formula 1, a passivation layer can be formed on the surface of the stainless steel layer, which can effectively avoid direct contact between the electrolyte and the stainless steel layer, thereby advantageously inhibiting the corrosion of the stainless steel layer and preventing the electrolyte from being continuously decomposed. Thus, the battery has better cycling stability.

In the embodiments of the present disclosure, the compound represented by Formula 1 has relatively strong electronegativity and relatively high binding energy with the stainless steel layer, and is therefore adsorbed on a surface of the stainless steel layer, promoting the formation of the passivation layer. The compound represented by Formula 1 can form the passivation layer of a network structure on the surface of the stainless steel layer. The passivation layer has a high compactness and thus can effectively prevent the direct contact between other components of the electrolyte and the stainless steel layer, thereby advantageously inhibiting the corrosion of the stainless steel layer and preventing the electrolyte from being continuously decomposed. Thus, the battery according to the embodiments of the present disclosure has better cycling stability. In addition, the passivation layer with the three-dimensional network structure formed by the compound represented by Formula 1 has relatively high stability and is suitable for protecting the stainless steel layer with a continuous interface and a large interface area.

In the embodiments of the present disclosure, the compound represented by Formula 1 may be directly added to the electrolyte, and the electrolyte may be injected into the battery. During a formation process of the battery or an operation process of the battery, the passivation layer is formed as a protective layer on the stainless steel layer that may exist, through the reaction of the compound represented by Formula 1, and the passivation layer include element sulfur.

In some embodiments, the compound represented by Formula 1 is selected from at least one of:

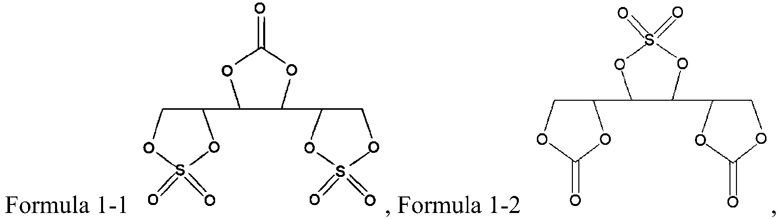

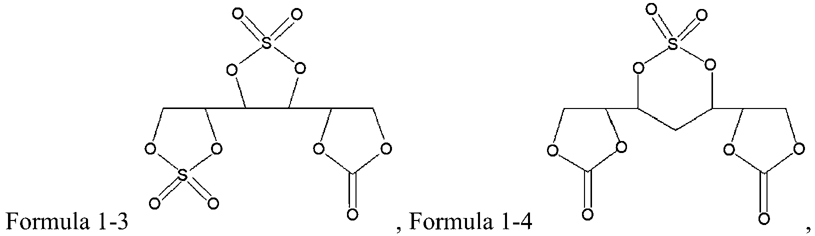

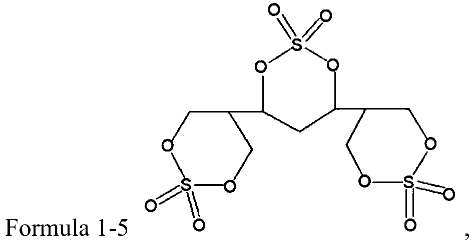

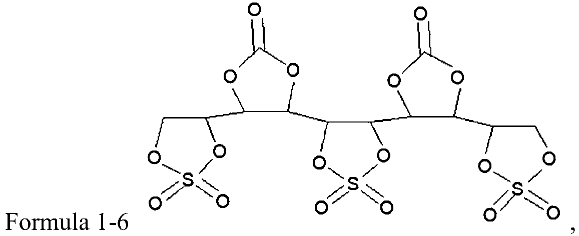

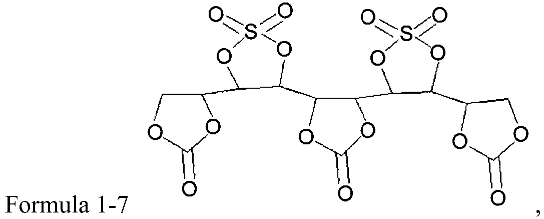

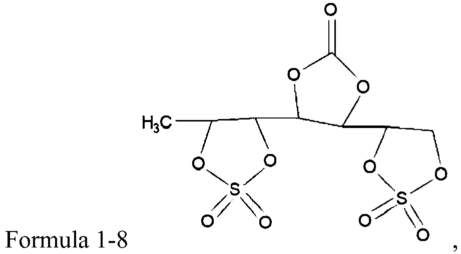

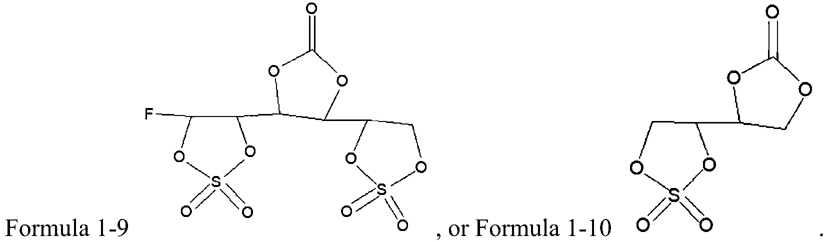

In some embodiments, a mass proportion of the compound represented by Formula 1 in the electrolyte ranges from 0.02% to 10%. In a specific example, the mass proportion of the compound represented by Formula 1 may be 0.02%, 0.05%, 0.1%, 0.5%, 1%, 2%, 3%, 4%, 5%, 6%, 7%, 8%, 9% or 10%, etc.

In the embodiments of the present disclosure, the mass proportion of the compound represented by Formula 1 in the electrolyte ranges from 0.02% to 10%, which is the content of the compound represented by Formula 1 in the electrolyte in an initial state when the compound represented by Formula 1 has not yet been used to form the passivation layer. On the one hand, such an addition amount is conducive to forming the passivation layer having an effective thickness on the stainless steel surface, preventing the decomposition of the electrolyte components, which leads to the deterioration of the cycle performance. On the other hand, such an addition amount is conducive to ensuring that the electrolyte maintains relatively high conductivity.

In some embodiments, the battery further includes a housing and/or a cover plate, and a negative current collector. The battery component includes a portion of the housing and/or cover plate welded to the negative current collector, and the portion includes the stainless steel layer.

In the embodiments of the present disclosure, the housing and/or the cover plate of the battery are made of stainless steel, and a nickel-plated layer may be provided on a surface of the stainless steel. However, when the housing and/or the cover plate of the battery are welded to the negative current collector, the nickel-plated layer on the surface of the stainless steel may be damaged and thus integrated with the negative current collector to form a welding point. The welding point is in direct contact with the electrolyte due to the absence of the protection of the nickel-plated layer. Thus, the cover plate may be easily corroded by the electrolyte and consume the electrolyte, resulting in poor cycling stability. In the embodiments of the present disclosure, by forming the passivation layer at the welding connection portion with the compound represented by Formula 1, the welding connection portion can be prevented from continuously contacting with the electrolyte, thereby protecting the welding connection portion from being corroded by the electrolyte and avoiding extensive consumption of the electrolyte. In this way, the battery can be advantageously improved in terms of electrochemical performance.

In addition, the portion of the housing and/or cover plate welded to the negative current collector has a large current density and a low potential, which can further promote reduction of the compound represented by Formula 1 to form a passivation coating of a network structure.

In some embodiments, the portion of the housing and/or cover plate welded to the negative current collector has a cross-sectional area ranging from 5 mm² to 400 mm².

In a specific example, the cross-sectional area of the portion of the housing and/or cover plate welded to the negative current collector may be 5 mm², 10 mm², 50 mm², 100 mm², 150 mm², 200 mm², 250 mm², 300 mm², 350 mm², or 400 mm², etc.

In the embodiments of the present disclosure, the cross-sectional area of the welding connection portion may affect an amount of the compound represented by Formula 1 and the electrochemical performance of the battery. With an increase in the cross-sectional area of the welding connection portion, the required amount of the compound represented by Formula 1 increases correspondingly. In particular, when the passivation layer is formed by adding the compound represented by Formula 1 to the electrolyte, the cross-sectional area of the welding connection portion in the embodiments of the present disclosure ranges from 5 mm² to 400 mm². By adding an appropriate amount of the compound represented by Formula 1 to the electrolyte, the passivation layer capable of fully covering the cross-sectional position can be formed without increasing ionic conductivity of the electrolyte, thereby ensuring a high electrochemical performance of the battery.

Further, the cross-sectional area of the portion of the housing and/or cover plate welded to the negative current collector ranges from 30 mm² to 300 mm². In a specific example, the cross-sectional area of the portion of the housing and/or cover plate welded to the negative current collector may be 30 mm², 60 mm², 90 mm², 120 mm², 160 mm², 190 mm², 210 mm², 240 mm², 270 mm², or 300 mm², etc.

According to the embodiments of the present disclosure, the cross-sectional area of the portion of the housing and/or cover plate welded to the negative current collector ranges from 30 mm² to 300 mm², which is conducive to further obtaining the battery having the relatively high electrochemical performance.

Further, the welding connection is implemented by means of laser welding.

In the embodiments of the present disclosure, the negative current collector is connected to the housing and/or cover of the battery through the laser welding, which may cause significant damage to the nickel-plated layer on the surface of the stainless steel layer.

In some embodiments, the battery includes a cylindrical battery.

The cylindrical batteries have higher volumetric energy densities and can be manufactured with mature processes, and thus they are given priority for use in passenger vehicle power batteries. However, with the increasingly higher requirements on the energy density and a charging speed of the batteries, the cylindrical batteries have evolved toward larger dimensions and increased numbers of negative current collectors (also referred as to tabs), resulting in an increase in welding areas between the negative current collectors and housing portions of the batteries (such as a negative post). When the electrolyte comes into contact with these portions, corrosion of welding points of the batteries and continuous consumption and decomposition of the electrolyte may occur, resulting in a decline in battery performance. Therefore, the cylindrical battery according to the embodiments of the present disclosure has more practical application value.

In some embodiments, a housing of the cylindrical battery has an outer diameter ranging from 20 mm to 65 mm.

In a specific example, the outer diameter of the housing of the cylindrical battery may be 20 mm, 25 mm, 30 mm, 32 mm, 34 mm, 36 mm, 38 mm, 40 mm, 42 mm, 44 mm, 46 mm, 48 mm, 50 mm, 55 mm, 60 mm, or 65 mm, etc.

For the cylindrical battery according to the embodiments of the present disclosure, the outer diameter of the housing ranges from 30 mm to 55 mm, which can ensure a relatively high energy density and a relatively low discharge temperature rise of the battery at the same time, without increasing difficulty of battery package (PACK).

In some embodiments, the battery further includes a jelly roll. The jelly roll includes a positive electrode plate, a negative electrode plate, and a separator.

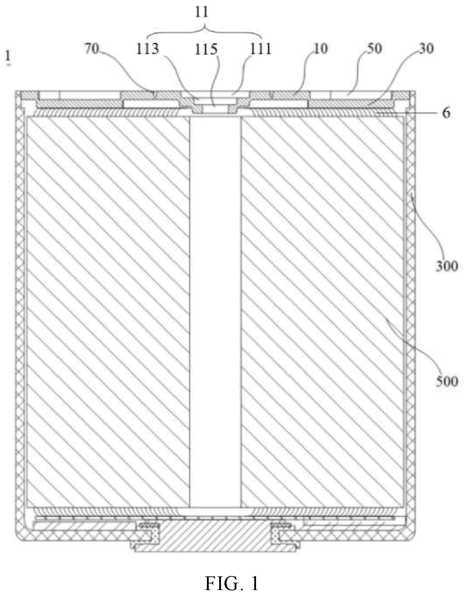

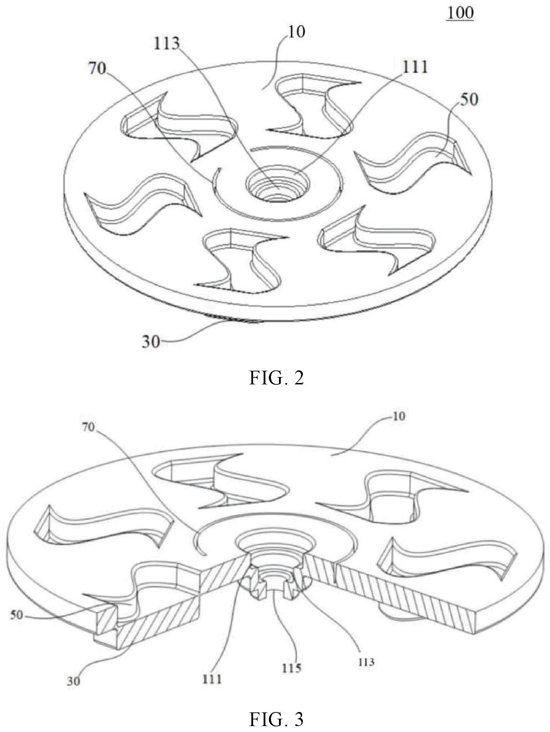

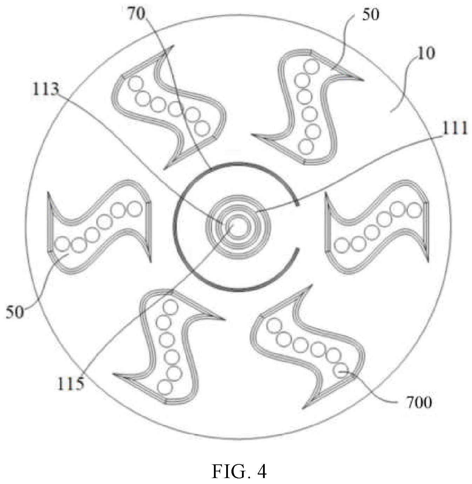

The cylindrical battery has a structure well known in the art. As examples, a schematic structural view of a cylindrical battery as shown in FIG. 1 and schematic structural views of a cover plate as shown in FIG. 2 to 4 are provided. A cylindrical battery 1 includes a housing 300 and a jelly roll 500 accommodated in the housing 300. On a negative electrode side of the cylindrical battery, a negative current collector 6 and a cover plate 100 are mounted on the housing 300. The cover plate 100 includes a cover plate base 10. The cover plate base 10 has a first channel 111, a second channel 113, and a third channel 115 that are sequentially coaxially opened at a center of the cover plate base 10. The first channel 111, the second channel 113, and the third channel 115 are formed as an electrolyte injection hole 11. The cover plate base 10 is further provided with an explosion-proof groove 70 coaxially disposed with the electrolyte injection hole 11. The cover plate base 10 is further provided with a plurality of counterbores 50, and all the counterbores 50 are uniformly arranged in a circular array around the electrolyte injection hole 11. The counterbore 50 is further provided with an abutment portion 30 at a bottom of the counterbore 50, and the abutment portion 30 protrudes downwards and is welded to the negative current collector 6. As shown in FIG. 4, the abutment portion 30 and the negative current collector 6 are welded together through a plurality of welding points 700 on a contact surface therebetween. Since the cover plate 100 is made of stainless steel, a nickel-plated layer is provided on a surface of the stainless steel. When the cover plate 100 of the cylindrical battery 1 is connected to the negative current collector 6 by welding, the nickel-plated layer on the stainless steel surface may be destroyed and then integrated with the negative current collector 6 to form a welding point 700. The welding point 700 is in direct contact the electrolyte due to lack of protection of the nickel-plated layer, resulting in that the cover plate 100 is likely corroded by the electrolyte. Thus, the electrolyte is consumed, resulting in poor cycling stability. In the embodiments of the present disclosure, the passivation layer is formed by the compound represented by Formula 1 at the welding connection portion, thereby preventing the welding connection portion from continuously contacting with the electrolyte, thereby preventing the welding connection portion from being corroded by the electrolyte and avoiding the extensive consumption of the electrolyte. In this way, it is conducive to improving the electrochemical performance of the battery.

Further, the negative electrode plate includes a negative active material layer and a negative current collector, and the negative active material layer covers a side or two sides of the negative current collector.

Further, the negative active material layer includes a negative active material, a negative binder, and a negative conductive agent.

Still further, mass proportions of components in the negative active material layer are: 90% to 99% of the negative active material, 0% to 5% of the negative conductive agent, and 1% to 10% of the negative binder.

Still further, the negative active material includes at least one of graphite, hard carbon, a silicon-containing compound, or silicon.

Still further, the negative binder includes at least one of sodium carboxymethyl cellulose (CMC), styrene-butadiene rubber (SBR), polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, polyamide imide, polyvinyl alcohol, or sodium polyacrylate.

Still further, the negative conductive agent includes at least one of natural graphite, artificial graphite, carbon black, acetylene black, Ketjen black, carbon fiber, or graphene.

Still further, the negative current collector includes at least one of copper foil, composite copper foil, foamy nickel, foamy copper, or aluminum foil.

Further, the positive electrode plate includes a positive active material layer and a positive current collector, and the positive active material layer covers a side or two sides of the positive current collector.

Further, the positive active material layer includes a positive active material, a positive binder, and a positive conductive agent.

Still further, mass proportions of components in the positive active material layer are: 90% to 99.5% of the positive active material, 0.25% to 5% of the positive conductive agent, and 0.25% to 5% of the positive binder.

Still further, the positive active material includes at least one of lithium iron phosphate (LiFePO₄), lithium cobalt oxide (LiCoO₂), ternary material LiNiₓCo_{y}Mn_{z}O₂ (x+y+z=1), lithium iron manganese phosphate material, lithium-rich manganese-based material (xLi₂MnO₃·(1-x)LiMO₂), lithium nickel manganese oxide (LiNi_{0.5}Mn_{1.5}O₄), lithium manganese oxide (LiMn₂O₄), sodium iron phosphate material, three-dimensional tunnel-structured Na_{0.44}MnO₂, P2-layered NaMO₂ (M is one, two or three of Ni, Mn, and Fe), NaFePO₄, Na₄Fe₃(PO₄)₂P₂O₇, Na₃V₂(PO₄)₃, Na₃V₂(PO₄)₂F₃, Na₂Fe(CN)₆, or Na₂MnFe(CN)₆.

Still further, the positive binder includes at least one of polytetrafluoroethylene, polyvinylidene fluoride (PVDF), polyvinyl fluoride, polyethylene, polypropylene, polyvinyl alcohol, carboxymethyl cellulose, hydroxypropyl cellulose, diacetyl cellulose, polyvinyl chloride, carboxylated polyvinyl chloride, ethylene oxide-containing polymer, polyvinylpyrrolidone, or polyurethane.

Still further, the positive conductive agent includes at least one of carbon black, acetylene black, graphene, Ketjen black, or carbon fiber.

Still further, the positive current collector includes at least one of aluminum foil, composite aluminum foil, or nickel foil.

Further, the material of the separator is not limited and can be selected by those skilled in the art according to actual needs. Still further, in an embodiment of the present disclosure, the material of the separator includes at least one of a coated or uncoated polypropylene (PP) film, polyethylene (PE) film, or polyvinylidene fluoride film.

In some embodiments, the electrolyte satisfies at least one of the following conditions (1) to (3).
(1) The electrolyte includes a solvent, which includes at least one of a carbonate solvent, a carboxylate solvent, an ether solvent, a phosphorus-containing solvent, a sulfur-containing solvent, or a fluorinated aromatic solvent.
(2) The electrolyte includes a conductive salt, which includes at least one of lithium hexafluorophosphate (LiPF₆), lithium bis(fluorosulfonyl)imide (LiFSI), lithium bis(trifluoromethylsulfonyl)imide, sodium hexafluorophosphate (NaPF₆), sodium bis(fluorosulfonyl)imide (NaFSI), or sodium bis(trifluoromethylsulfonyl)imide.
(3) The electrolyte includes an additive, which includes at least one of vinylene carbonate (VC), fluoroethylene carbonate (FEC), vinylethylene carbonate (VEC), or succinic anhydride (SA).

In some embodiments, the solvent in the electrolyte includes at least one of ethylene carbonate (EC), propylene carbonate (PC), diethyl carbonate (DEC), dimethyl carbonate (DMC), ethyl methyl carbonate (EMC), fluoroethylene carbonate (FEC), propyl butyrate (PB), ethyl butyrate (EB), propyl propionate (PP), ethyl propionate (EP), methyl propionate (MP), propyl acetate (PA), fluorobenzene (FB), ethyl acetate (EA), methyl acetate (MA), propyl formate (PF), ethyl formate (EF), methyl formate (MF), or γ-butyrolactone.

In some embodiments, the conductive salt in the electrolyte accounts for 10% to 20% of a total mass of the electrolyte.

In the embodiments of the present disclosure, when the conductive salt in the electrolyte accounts for 10% to 20% of the total mass of the electrolyte, the electrochemical performance of the battery can be further improved, thus achieving higher conductivity and chemical stability.

A second aspect of the present disclosure provides a method for manufacturing the above battery. The method includes: adding the compound represented by Formula 1 to the electrolyte; and forming, by the compound represented by Formula 1, a passivation layer on the surface of the stainless steel subsequent to contacting the electrolyte with a surface of stainless steel.

In the embodiments of the present disclosure, by directly adding the compound represented by Formula 1 to the electrolyte, it is conducive to simplifying the manufacturing process of the battery, reducing operation difficulty, and saving costs.

In some embodiments, a mass proportion of the compound represented by Formula 1 in the electrolyte ranges from 0.02% to 10%. In a specific example, the mass proportion of the compound represented by Formula 1 is 0.02%, 0.05%, 0.1%, 0.5%, 1%, 2%, 3%, 4%, 5%, 6%, 7%, 8%, 9%, or 10%, etc.

In the embodiments of the present disclosure, the mass proportion of the compound represented by Formula 1 in the electrolyte ranges from 0.02% to 10%, which is the content of the compound represented by Formula 1 in an initial state of the electrolyte and has not yet been used to form the passivation layer. On the one hand, such an addition amount is conducive to forming the passivation layer of an effective thickness on the stainless steel surface, preventing the decomposition of the electrolyte components and the deterioration of the cycle performance. On the other hand, such an addition amount is conducive to ensuring that the electrolyte maintains relatively high conductivity.

In some embodiments, the passivation layer is formed by the compound represented by Formula 1 under the conditions including: The specific temperature may be selected based on actual conditions. In a specific example, the passivation layer is formed by polymerizing the compound represented by Formula 1 under the conditions including: a temperature ranging from 20°C to 60°C, and more specifically, for example, the temperature being 20°C, 25°C, 30°C, 35°C, 40°C, 45°C, 50°C, 55°C, or 60°C, etc.

In some embodiments, the passivation layer is formed by polymerizing the compound represented by Formula 1 under the conditions including: a temperature ranging from 20°C to 45°C. In a specific example, the temperature is 20°C, 22°C, 24°C, 26°C, 28°C, 30°C, 32°C, 34°C, 36°C, 38°C, 40°C, 42°C, 44°C, or 45°C, etc.

In the embodiments of the present disclosure, when the passivation layer is formed by polymerizing the compound represented by Formula 1 under the conditions meeting the above-required temperature conditions, the electrolyte has a relatively low viscosity, which is conducive to rapid polymerization of the compound to form the passivation layer having a relatively high density. At the same time, by meeting the above temperature conditions, thermal shrinkage of the cell separator can be avoided, which would otherwise affect the battery performance.

In some embodiments, the compound represented by Formula 1 is polymerized to form the passivation layer during a first charge of the battery or during the operation process of the battery.

A third aspect of embodiments of the present disclosure provides an electrical device. The electrical device includes the above battery or a battery manufactured by the above manufacturing method.

For the battery according to the embodiments of the present disclosure, the passivation layer is formed on the surface of the stainless steel layer of the battery component configured to be in contact with the electrolyte, preventing the battery component from being corroded by the electrolyte while avoiding the extensive consumption of the electrolyte. In this way, a battery with relatively high electrochemical performance can be obtained.

In a specific example, the electrical device includes 3C digital products, household appliances, passenger vehicles, drones, or electric aircraft, etc.

A fourth aspect of embodiments of the present disclosure provides a novel use of a compound represented by Formula 1. The compound represented by Formula 1 is configured to form a passivation layer on a surface of a stainless steel layer to prevent a reaction between the electrolyte and a battery component in contact with an electrolyte. The battery component includes a stainless steel layer on at least a contact surface of the battery component in contact with the electrolyte. The compound represented by Formula 1 is:

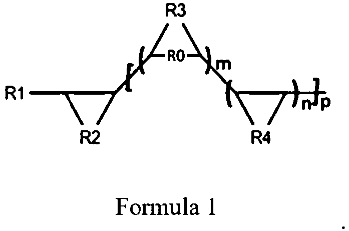

In Formula 1, m is an integer ranging from 0 to 3, n is an integer ranging from 0 to 3, and m and n are not both 0; p is an integer ranging from 1 to 5; R0 is a single bond or methylene; R1 is hydrogen, halogen, hydrocarbyl containing 1 to 5 carbon atoms, or halogenated hydrocarbyl containing 1 to 5 carbon atoms; and R2, R3, and R4 are each independently

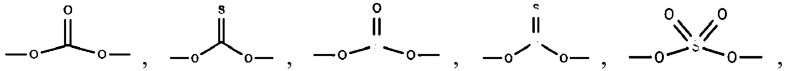

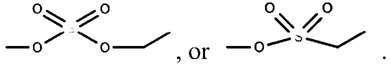

Components (which, as an example, may be a housing, a cover plate, or both a housing and a cover plate) of the battery are made of stainless steel. Typically, these components are each provided with a nickel-plated layer on surfaces of the components to protect the stainless steel layer, thereby effectively preventing reactions caused by the contact between the components and the electrolyte. However, when the nickel-plated layer on the surface of the stainless steel layer of the battery component for contacting with the electrolyte is damaged, the stainless steel layer is directly exposed to the electrolyte. During a charge and discharge process of the battery, the stainless steel layer is corroded by the electrolyte, leading to severe corrosion. At the same time, the electrolyte is extensively decomposed, resulting in poor cycling stability of the battery.

In the embodiments of the present disclosure, a passivation layer can be formed on the surface of the stainless steel layer by adopting the compound represented by Formula 1, which can effectively avoid direct contact between the electrolyte and the stainless steel layer, thereby advantageously inhibiting the corrosion of the stainless steel layer and preventing the electrolyte from being continuously decomposed. Thus, the battery has better cycling stability.

In the embodiments of the present disclosure, the compound represented by Formula 1 has relatively strong electronegativity and relatively high binding energy with the stainless steel layer, and is therefore adsorbed on a stainless steel layer, promoting the formation of the passivation layer. The compound represented by Formula 1 can form the passivation layer of a network structure on the surface of the stainless steel layer. The passivation layer has a high density, which can effectively avoid direct contact between other components of the electrolyte and the stainless steel layer, thereby advantageously inhibiting the corrosion of the stainless steel layer and preventing the electrolyte from being continuously decomposed. Thus, the battery according to the embodiments of the present disclosure has the better cycling stability. In addition, the passivation layer with a three-dimensional network structure formed by the compound represented by Formula 1 has relatively high stability and is suitable for protecting the stainless steel layer with a continuous interface and a large interface area.

In some embodiments, the compound represented by Formula 1 is selected from at least one of:

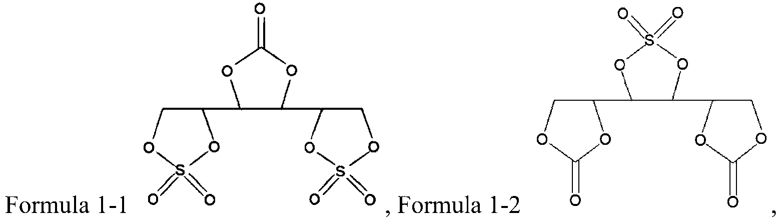

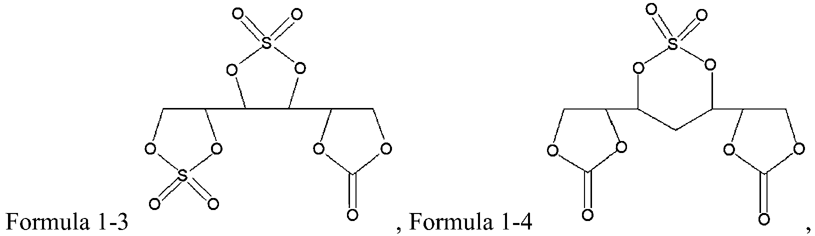

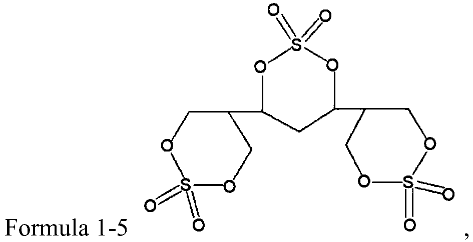

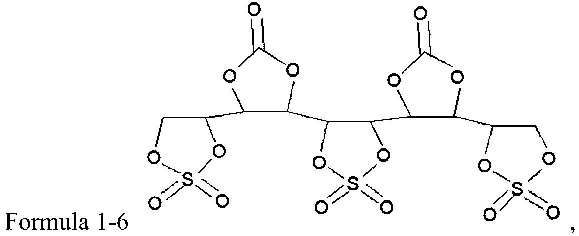

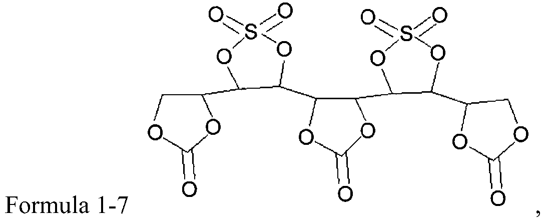

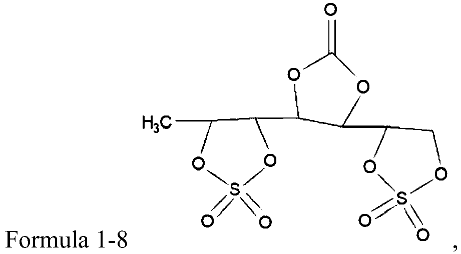

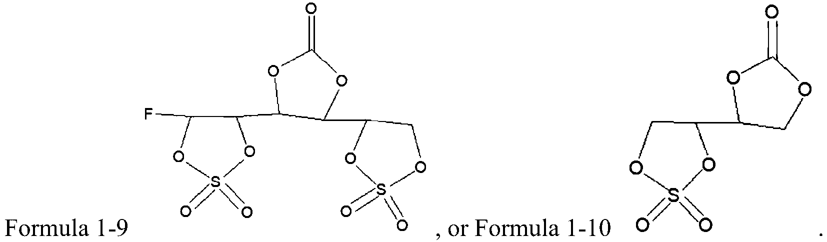

The compounds represented by Formula 1-1 to Formula 1-10 according to the embodiments of the present disclosure are conducive to the formation of the passivation layer on the stainless steel layer of the battery component, thereby protecting the battery component and preventing the extensive consumption of the electrolyte. As a result, the electrochemical performance of the battery is improved.

The solutions of the present disclosure are described below through specific embodiments. It should be noted that the following embodiments are only used to illustrate the present disclosure and should not be construed as a limitation to the scope of the present disclosure. When the specific technology or conditions are not specified in the embodiments, the technology or conditions described in the literature in the art or a product manual will prevail. Reagents and instruments used without specifying the manufacturer are all conventional and commercially available products.

### Example 1

This example provided a cylindrical lithium-ion battery, which was prepared by a method as specifically described below.
(1) Preparation of electrolyte: In an inert atmosphere (water<0.1 ppm and oxygen<1 ppm), ethylene carbonate (EC), ethyl methyl carbonate (EMC), and ethyl acetate (EA) were mixed in a mass ratio of EC: EMC: EA=30: 60: 10; after mixing uniformly, lithium bis(fluorosulfonyl)imide (LiFSI) and lithium hexafluorophosphate (LiPF₆) were added, with a mass proportion of LiFSI in the electrolyte being 5 wt%, and a mass proportion of LiPF₆ in the electrolyte being 9 wt%; then, the compound represented by Formula 1-1 was added, with a mass proportion of the compound represented by Formula 1-1 in the electrolyte being 0.5 wt %; and the electrolyte was obtained.
(2) Preparation of positive electrode plate: A lithium iron phosphate positive active material, a conductive agent acetylene black, and a binder polyvinylidene fluoride (PVDF) were dispersed in the solvent of N-methylpyrrolidone (NMP) in a mass ratio of 96:2:2, and fully stirred to form a uniform positive electrode slurry; and the positive electrode slurry was uniformly coated on a positive current collector aluminum foil, followed by drying, rolling, and cutting, to obtain the positive electrode plate.
(3) Preparation of negative electrode plate: A negative active material graphite, a conductive agent acetylene black, a binder sodium carboxymethyl cellulose (CMC), and styrene-butadiene rubber (SBR) were dispersed in an appropriate amount of deionized water in a mass ratio of 95:2:2:1, stirred and mixed thoroughly to form a uniform negative electrode slurry; and the negative electrode slurry was uniformly coated on a negative current collector copper foil, followed by drying, rolling, and cutting to obtain the negative electrode plate.
(4) Preparation of separator: PE separator with a base material having a thickness of 16 µm.
(5) Manufacture of battery: The positive electrode plate, the separator, and the negative electrode plate were wound to form a jelly roll, where the separator was placed between the positive electrode plate and the negative electrode plate for isolation; the jelly roll was placed in a housing (made of nickel-plated stainless steel); the negative current collector was welded with a cover plate through laser welding, with a cross-sectional area of all the welding sites (i.e., all welding points) being 144 mm², where the housing had an outer diameter of 46 mm; after drying, an electrolyte was injected. After processes such as standing, formation (to form a passivation layer) by charging the cell to 3.6 V at 0.1C under 45°C, and capacity grading, the preparation of the battery was completed.

### Examples 2 to 33

The cylindrical lithium-ion batteries of Examples 2 to 33 were prepared with the method of Example 1, with specific differences as listed in Table 1.

### Comparative Example 1

This comparative example provided a cylindrical lithium-ion battery, which was prepared with the method as described in Example 1, except that the compound represented by Formula 1 was not added to the electrolyte.

### Comparative Example 2

This comparative example provided a cylindrical lithium-ion battery, which was prepared with the method as described in Example 1, except that 2.5% of a film-forming additive VC (vinylene carbonate) was added to the electrolyte.

### Comparative Example 3

This comparative example provided a cylindrical lithium-ion battery, which was prepared with the method as described in Example 1, except that 2.5% of a film-forming additive FEC (Fluoroethylene carbonate) was added to the electrolyte.

### Comparative Example 4

This comparative example provided a cylindrical lithium-ion battery, which was prepared with the method as described in Example 1, except that 2.5% of a film-forming additive vinyl ethylene carbonate (VEC) (4-vinyl-1,3-dioxolan-2-one) was added to the electrolyte.

The parameters of Examples 1 to 33 and Comparative Examples 1 to 4, such as the type of the compound represented by Formula 1, the added amount of the compound represented by Formula 1, and the preparation parameter conditions, are shown in Table 1.

**[Table 1]**

| Serial number | Positive active material | Type of compound represented by Formula 1 | Amount of compound represented by Formula 1/wt% | Other additives in electrolyte | Cross-sectional area of welding site/mm² | Outer diameter of housing/mm | Formation temperature/ °C |
|---|---|---|---|---|---|---|---|
| Example 1 | Lithium iron phosphate | Formula 1-1 | 0.5 | None | 144 | 46 | 45 |
| Example 2 | Lithium iron phosphate | Formula 1-2 | 0.5 | None | 144 | 46 | 45 |
| Example 3 | Lithium iron phosphate | Formula 1-3 | 0.5 | None | 144 | 46 | 45 |
| Example 4 | Lithium iron phosphate | Formula 1-4 | 0.5 | None | 144 | 46 | 45 |
| Example 5 | Lithium iron phosphate | Formula 1-5 | 0.5 | None | 144 | 46 | 45 |
| Example 6 | Lithium iron phosphate | Formula 1-6 | 0.5 | None | 144 | 46 | 45 |
| Example 7 | Lithium iron phosphate | Formula 1-7 | 0.5 | None | 144 | 46 | 45 |
| Example 8 | Lithium iron phosphate | Formula 1-8 | 0.5 | None | 144 | 46 | 45 |
| Example 9 | Lithium iron phosphate | Formula 1-9 | 0.5 | None | 144 | 46 | 45 |
| Example 10 | Lithium iron phosphate | Formula 1-10 | 0.5 | None | 144 | 46 | 45 |
| Example 11 | Lithium iron phosphate | Formula 1-1 | 0.005 | None | 144 | 46 | 45 |
| Example 12 | Lithium iron phosphate | Formula 1-1 | 0.05 | None | 144 | 46 | 45 |
| Example 13 | Lithium iron phosphate | Formula 1-1 | 8 | None | 144 | 46 | 45 |
| Example 14 | Lithium iron phosphate | Formula 1-1 | 0.02 | None | 144 | 46 | 45 |
| Example 15 | Lithium iron phosphate | Formula 1-1 | 10 | None | 144 | 46 | 45 |
| Example 16 | Lithium iron phosphate | Formula 1-1 | 12 | None | 144 | 46 | 45 |
| Example 17 | Lithium iron phosphate | Formula 1-1 | 0.5 | None | 2 | 46 | 45 |
| Example 18 | Lithium iron phosphate | Formula 1-1 | 0.5 | None | 30 | 46 | 45 |
| Example 19 | Lithium iron phosphate | Formula 1-1 | 0.5 | None | 300 | 46 | 45 |
| Example 20 | Lithium iron phosphate | Formula 1-1 | 0.5 | None | 5 | 46 | 45 |
| Example 21 | Lithium iron phosphate | Formula 1-1 | 0.5 | None | 400 | 46 | 45 |
| Example 22 | Lithium iron phosphate | Formula 1-1 | 0.5 | None | 450 | 46 | 45 |
| Example 23 | Lithium iron phosphate | Formula 1-1 | 0.5 | None | 144 | 30 | 45 |
| Example 24 | Lithium iron phosphate | Formula 1-1 | 0.5 | None | 144 | 55 | 45 |
| Example 25 | Lithium iron phosphate | Formula 1-1 | 0.5 | None | 144 | 21 | 45 |
| Example 26 | Lithium iron phosphate | Formula 1-1 | 0.5 | None | 144 | 65 | 45 |
| Example 27 | Lithium iron phosphate | Formula 1-1 | 0.5 | 2.5% VC | 144 | 46 | 45 |
| Example 28 | Lithium iron phosphate | Formula 1-1 | 1.5 | None | 144 | 46 | 45 |
| Example 29 | Lithium iron phosphate | Formula 1-1 | 2.5 | None | 144 | 46 | 45 |
| Example 30 | Lithium iron phosphate | Formula 1-1 | 3.5 | None | 144 | 46 | 45 |
| Example 31 | Lithium iron phosphate | Formula 1-1 | 0.5 | None | 144 | 46 | 20 |
| Example 32 | Lithium cobalt oxide | Formula 1-1 | 0.5 | None | 144 | 46 | 45 |
| Example 33 | NCM523 | Formula 1-1 | 0.5 | None | 144 | 46 | 45 |
| Comparative Example 1 | Lithium iron phosphate | / | / | / | 144 | 46 | 45 |
| Comparative Example 2 | Lithium iron phosphate | / | / | 2.5% VC | 144 | 46 | 45 |
| Comparative Example 3 | Lithium iron phosphate | / | / | 2.5% FEC | 144 | 46 | 45 |
| Comparative Example 4 | Lithium iron phosphate | / | / | 2.5% VEC | 144 | 46 | 45 |

### Performance test:

### 1. Test method:

1. High-temperature cycle test: The battery was placed at 45°C and subjected to charge and discharge cycles with a current of 1.5C. A maximum discharge capacity during first three cycles was recorded as Q, and a capacity after 1000 cycles was recorded as Q₂. A capacity retention rate after high-temperature cycle was calculated based on the following formula: Capacity retention rate (%)=Q₂/Q×100.
2. Corrosion of welding point: The battery was placed at room temperature and subjected to 10 charge and discharge cycles with a current of a 1.5C; and then, the battery was disassembled to observe the corrosion of the welding points.
3. Method for detecting element in passivation layer: The formed battery was disassembled; and a portion where the stainless steel layer was in contact with the electrolyte was cut out and subjected to an elemental detection using a scanning electron microscope energy dispersive spectrometer (EDS).

### II. Test Results

The test results are shown in Table 2.

**[Table 2]**

| Serial number | Corrosion of housing | Passivation layer contains sulfur? | Capacity retention rate/% |
|---|---|---|---|
| Example 1 | No | Yes | 83.6 |
| Example 2 | No | Yes | 83.1 |
| Example 3 | No | Yes | 84.1 |
| Example 4 | No | Yes | 83.8 |
| Example 5 | No | Yes | 83.3 |
| Example 6 | No | Yes | 83.1 |
| Example 7 | No | Yes | 84 |
| Example 8 | No | Yes | 83.7 |
| Example 9 | No | Yes | 83.7 |
| Example 10 | No | Yes | 84.9 |
| Example 11 | No | Yes | 78.1 |
| Example 12 | No | Yes | 82.3 |
| Example 13 | No | Yes | 81.9 |
| Example 14 | No | Yes | 78.1 |
| Example 15 | No | Yes | 78.6 |
| Example 16 | No | Yes | 78.6 |
| Example 17 | No | Yes | 77.2 |
| Example 18 | No | Yes | 80.9 |
| Example 19 | No | Yes | 80.2 |
| Example 20 | No | Yes | 77.2 |
| Example 21 | No | Yes | 78.1 |
| Example 22 | No | Yes | 78.1 |
| Example 23 | No | Yes | 83.4 |
| Example 24 | No | Yes | 82.1 |
| Example 25 | No | Yes | 82.9 |
| Example 26 | No | Yes | 77.6 |
| Example 27 | No | Yes | 85.5 |
| Example 28 | No | Yes | 85.1 |
| Example 29 | No | Yes | 82.1 |
| Example 30 | No | Yes | 81.7 |
| Example 31 | No | Yes | 78.6 |
| Example 32 | No | Yes | 72.8 |
| Example 33 | No | Yes | 79.7 |
| Comparative Example 1 | Yes | No | 58.3 |
| Comparative Example 2 | Yes | No | 68.2 |
| Comparative Example 3 | Yes | No | 68.9 |
| Comparative Example 4 | Yes | No | 71.2 |

The test results are shown in Table 2 above. It can be seen from the results listed in the table that, compared with Comparative Examples, the EDS test results reveal the presence of element sulfur at the portion where the stainless steel layer was in contact with the electrolyte in Examples, indicating that the stainless steel layer had the passivation layer and that the passivation layer was formed with the participation of the reaction of the compound represented by Formula 1. Examples had a significant anti-corrosion effect. In addition, the capacity retention after the high-temperature cycle was significantly improved. At the same time, only the batteries including the compound represented by Formula 1 in the electrolyte could prevent the stainless steel from being corroded, while the conventional additives, such as VC and FEC, had no effect. These results indicate that the battery according to the present disclosure has outstanding advantages.

It should be noted that the present disclosure is not limited to the above-mentioned embodiments. The above-mentioned embodiments are merely the purpose of illustration, and any embodiments having substantially the same structure and exerting the same effects as the technical idea within the scope of the technical solutions of the present disclosure are all encompassed by the technical scope of the present disclosure. In addition, various modifications that can be conceived by those skilled in the art to the embodiments, as well as other forms constructed by combining some of the constituent elements of the embodiments, are also encompassed by the scope of the present disclosure without departing from the gist of the present disclosure.

## Claims

1. A battery, comprising:
an electrolyte; and
a battery component in contact with the electrolyte, wherein:
the battery component comprises a stainless steel layer on at least a contact surface of the battery component in contact with the electrolyte; and
the electrolyte comprises a compound represented by Formula 1: 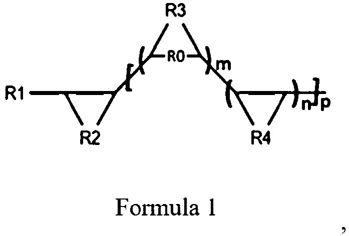 wherein:
m is an integer ranging from 0 to 3, n is an integer ranging from 0 to 3, and m and n are not both 0;
p is an integer ranging from 1 to 5;
R0 is a single bond or methylene;
R1 is hydrogen, halogen, hydrocarbyl containing 1 to 5 carbon atoms, or halogenated hydrocarbyl containing 1 to 5 carbon atoms; and
R2, R3, and R4 are each independently

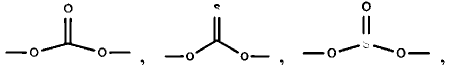

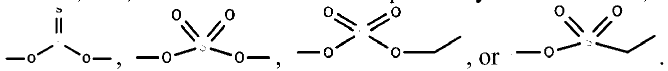

2. The battery according to claim 1, wherein the compound represented by Formula 1 is selected from at least one of:

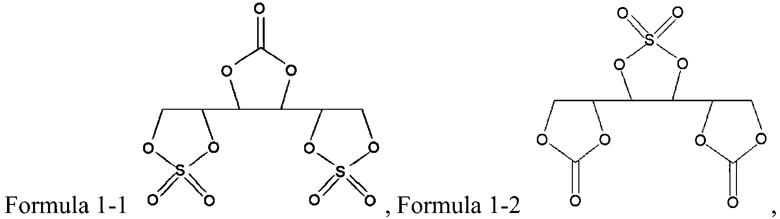

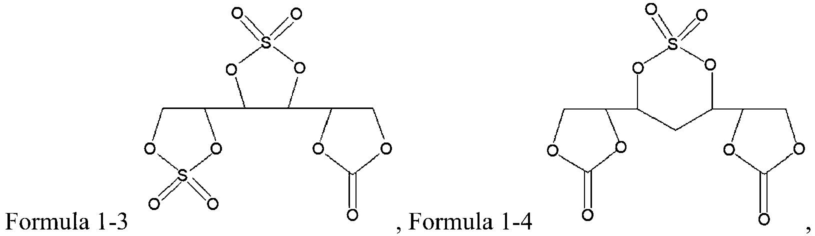

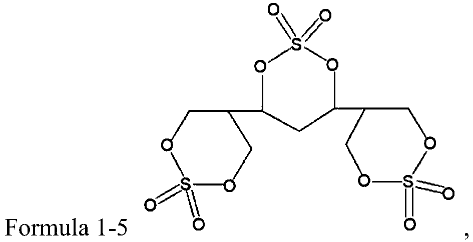

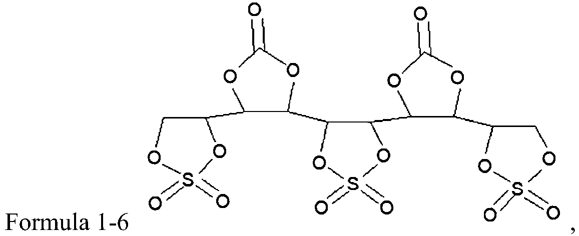

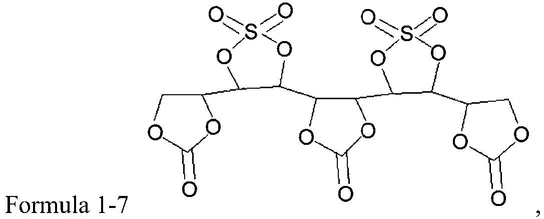

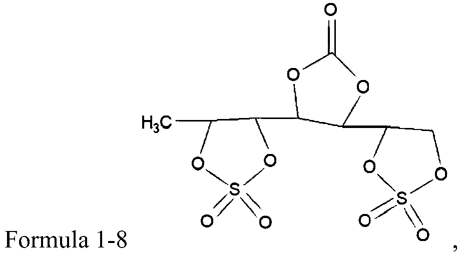

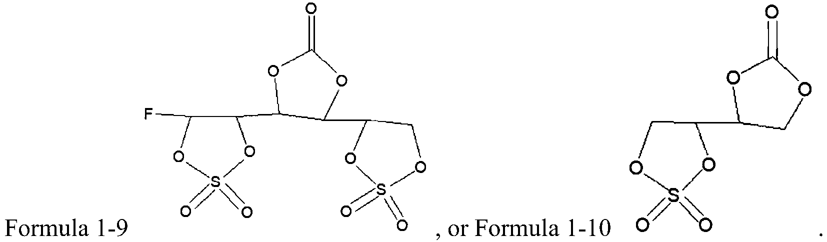

3. The battery according to claim 1 or 2, wherein a mass proportion of the compound represented by Formula 1 in the electrolyte ranges from 0.02% to 10%.

4. The battery according to any one of claims 1 to 3, further comprising a housing and/or a cover plate, and a negative current collector, wherein the battery component comprises a portion of the housing and/or cover plate welded to the negative current collector, the portion comprising the stainless steel layer.

5. The battery according to claim 4, wherein the portion of the housing and/or cover plate welded to the negative current collector has a cross-sectional area ranging from 5 mm² to 400 mm².

6. The battery according to any one of claims 1 to 5, wherein the battery comprises a cylindrical battery.

7. The battery according to claim 6, wherein a housing of the cylindrical battery has an outer diameter ranging from 20 mm to 65 mm.

8. The battery according to any one of claims 1 to 7, wherein the electrolyte satisfies at least one of the following conditions (1) to (3):
(1) the electrolyte comprises a solvent, the solvent comprising at least one of a carbonate solvent, a carboxylate solvent, an ether solvent, a phosphorus-containing solvent, a sulfur-containing solvent, or a fluorinated aromatic solvent;
(2) the electrolyte comprises a conductive salt, the conductive salt comprising at least one of lithium hexafluorophosphate, lithium bis(fluorosulfonyl)imide, lithium bis(trifluoromethylsulfonyl)imide, sodium hexafluorophosphate, sodium bis(fluorosulfonyl)imide, or sodium bis(trifluoromethylsulfonyl)imide; or
(3) the electrolyte comprises an additive, the additive comprising at least one of vinylene carbonate, fluoroethylene carbonate, vinylethylene carbonate, or succinic anhydride.

9. The battery according to any one of claims 1 to 8, further comprising a positive active material, wherein the positive active material comprises at least one of lithium iron phosphate, lithium cobalt oxide, ternary material LiNiₓCo_{y}MnzO₂, lithium iron manganese phosphate material, lithium-rich manganese-based material xLi₂MnO₃·(1-x)LiMO₂, lithium nickel manganese oxide, lithium manganese oxide, sodium iron phosphate material, three-dimensional tunnel-structured Na_{0.44}MnO₂, P2-layered NaMO₂, NaFePO₄, Na₄Fe₃(PO₄)₂P₂O₇, Na₃V₂(PO₄)₃, Na₃V₂(PO₄)₂F₃, Na₂Fe(CN)₆, or Na₂MnFe(CN)₆.

10. The battery according to any one of claims 1 to 9, further comprising a negative material, wherein the negative material comprises at least one of graphite, hard carbon, a silicon-containing compound, or silicon.
